(19) Europäisches Patentamt
European Patent Office
Office européen des brevets

(11) EP 1 442 079 B1

(12) EUROPEAN PATENT SPECIFICATION

(45) Date of publication and mention of the grant of the patent:
**29.03.2006 Bulletin 2006/13**

(21) Application number: **02785215.1**

(22) Date of filing: **14.10.2002**

(51) Int Cl.:
*C08L 53/02* (2006.01) *C08K 5/07* (2006.01)

(86) International application number:
**PCT/EP2002/011513**

(87) International publication number:
**WO 2003/035752 (01.05.2003 Gazette 2003/18)**

(54) **SOLID CURABLE POLYMERIC COMPOSITION**

FESTE HÄRTBARE POLYMERZUSAMMENSETZUNG

COMPOSITION POLYMERE SOLIDE DURCISSABLE

(84) Designated Contracting States:
**AT BE BG CH CY CZ DE DK EE ES FI FR GB GR IE IT LI LU MC NL PT SE SK TR**

(30) Priority: **18.10.2001 EP 01203974**

(43) Date of publication of application:
**04.08.2004 Bulletin 2004/32**

(73) Proprietor: **KRATON Polymers Research B.V.**
**1031 CM Amsterdam (NL)**

(72) Inventors:
- **MUYLDERMANS, Xavier**
**B-1348 Ottignies-Louvain-La-Neuve (BE)**
- **ROUMACHE, Olivier**
**B-1348 Ottignies-Louvain-La-Neuve (BE)**

(74) Representative: **Kortekaas, Marcel C.J.A. et al**
**KRATON Polymers Research B.V.**
**Intellectual Property Services**
**P.O. Box 37666**
**1030 BH Amsterdam (NL)**

(56) References cited:
**EP-A- 0 634 453**
**WO-A-00/00546**
**WO-A-01/57103**
**WO-A-01/68769**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

### Field of the Invention

The present invention relates to a solid curable polymeric composition. The invention further relates to a process for curing the solid curable polymeric composition; to the product of said process; and to articles containing the solid curable polymeric composition or cured polymeric composition, such as printing plates.

### Background of the invention

Thermoplastic elastomers are well known in the art and many thermoplastic elastomers are available commercially. An important class of thermoplastic elastomers is the class of styrenic block copolymers. These block copolymers are typically characterized by at least two polymer blocks of primarily polymerized monovinyl aromatic hydrocarbon monomers, separated by at least one elastomeric polymer block, such as a polyolefin or a(n optionally hydrogenated) polymer block of primarily polymerized conjugated diene monomers. Their behavior is explained on the basis of the so-called domain theory, wherein the poly(monovinyl aromatic hydrocarbon) polymer blocks cluster together and the elastomeric polymer blocks form a separate rubber phase that is the matrix.

Upon heating of a styrenic block copolymer above the glass-transition temperature of the poly(monovinyl aromatic hydrocarbon) blocks (about 95 °C in case of polystyrene), the viscosity and the elasticity of the block copolymer remains high compared to a homopolymer of the same molecular weight due to non-Newtonian behavior of the melt. This behavior is attributed to the persistence of a two-phase "domain" structure found in the melt below the so-called order-disorder transition temperature. In such a domain structure, flow can only take place by the poly(monovinyl aromatic hydrocarbon) polymer blocks of the block copolymer being pulled out of the domains.

Selectively hydrogenated block copolymers containing at least two mostly non hydrogenated poly(monovinyl aromatic hydrocarbon) blocks, e.g. polystyrene blocks, separated by at least one partially to completely hydrogenated conjugated diene block have very high and very non-Newtonian viscosities because of their extreme segmental incompatibility. Accordingly, processing is difficult and must take place under high shear conditions.

In most practical applications, the hydrogenated styrenic block copolymers is mixed with other ingredients being compatible with the rubber phase (like paraffinic plasticisers or hydrogenated tackyfiers) or compatible with the poly(monovinyl aromatic hydrocarbon) phase (like low molecular weight PS resins) or simply being easily dispersed with the block copolymer system (like $CaCO_3$ fillers or polypropylene).

Many applications, require elastomeric systems exhibiting three totally different sets of properties at various steps of their life:

1) First behavior is typically a low viscosity in presence or in absence of good solvents. This behavior is typically required during the mixing and the processing phases.
2) Second behavior can be summarized by 'solid and still processable and/or soluble'. As definition, 'solid' means here that it retains its shape for an acceptable time frame (e.g. several days or weeks) once only exposed to low stresses. This behavior is typically required during storage phase and after any shaping phase.
3) The third behavior is directly linked to the final application phase. The material typically must exhibit a solid behavior as well as a high resistance to stress, to temperature, to solvents, to daylight, to air and ozone...

Traditional thermoplastic materials do not differentiate 2) from 3) while the thermoset do not segregate 1) from 2). As a consequence thermoplastics compromise the 1) to 3) properties while the thermoset have to compromise 1) and 2). In other words, systems with easy processing at acceptable temperature are either limited in their temperature resistance and/or their swelling resistance (thermoplastics) or either limited in their capacity to exhibit a solid behavior while still processable (thermosets).

The traditional way to get both the advantages of the thermoplastic elastomers and thermosets rubbers is to cure a thermoplastic elastomer once all processing and shaping steps are finalized. To reach highly differentiate cured system, this approach typically require a reactive thermoplastic elastomer like the use of unsaturated rubber and the use of curing agents. Those systems are typically still reactive/unstable after the curing reaction and fail to resist chemically to aggressive environment in presence of UV light, of ozone and/or high temperatures. Examples of such systems may be found in US-A-2002/001775; US-A-5,972,565; US-A-5,948,594; US-A-5,512,419; EP-A-0,467,136; EP-A-4,894,315; US-A-5,472,824; US-A-5,112,725; US-A-4,959,285; US-A-4,320,188; US-A-4,430,417; JP-A-55/121-445; and US-A-4,162,919.

Accordingly, it would be desirable if a polymeric composition could be found, capable of decreasing the viscosity of styrenic block copolymers during processing without altering its solid character at room temperature and, preferably, capable of imparting good high temperature properties and solvent resistance in the final application, whilst preferably

retaining other useful properties of the polymeric composition.

This discovery should be of high interest for end-use applications like rubbery compounds and sealants. Among other possible applications: adhesives and coatings.

A solid curable polymeric composition exhibiting the above properties would be particularly interesting as rubbery compound in the field of printing plates, for example in the area of flexographic printing plates.

A typical printing plate based on a photocurable blend may contain up to 80% of unsaturated SIS (styrene-isoprene-styrene) or SBS (styrene-butadiene-styrene) copolymer and almost 15% of acrylates monomers with a photo-initiator, UV stabilizer, plasticisers, etc.

The relief representing the printing is UV cured through a mask in the plate and a washing step in solvents removing the uncured parts reveals the final plate.

Presently there is a trend to produce a new generation of printing plates having enhanced stability to UV light, ozone and solvents. For example, after use, the prior art printing plates have a tendency to crack or to become sticky once used in a UV and/or ozone containing environment. Therefore, the polymers ideally used are thermoplastic elastomers based on a poly(monovinyl aromatic hydrocarbon) block A and a mostly saturated elastomeric hydrocarbon chain. Since the elastomeric chain is saturated, the polymer is highly stable to temperature, ozone and UV. However, this stability has as consequence that this type of polymer is very difficult to cure with traditional rubber curing systems.

The US-A-4 151 057 discloses an electron beam cured adhesive composition possessing good cohesive strength at high temperatures with good shear strength and solvent resistance. The adhesive is a hydrogenated styrenic block copolymer containing tackifying resin and (meth)acrylate ester. The adhesives are especially suited for preparation as a 100% hot solids melt adhesives, since they give adequate processing viscosities, and good pot life, up to several hours, at processing temperature of about 150°C.

The EP-A-0 336 154 discloses a polymerisable adhesive primer comprises ester of methacrylic acid, monomer soluble elastomer, elastomeric resin and photo-initiator. A mixture of iso-butylmethacrylate 72.0, 1,4-butanediol dimethacrylate 5.0, SEBS/SEPS 10, ketone resin 5.0, and pigments-fillers 8.0% contg. an aryl ketone as photoinitiator was coated on EPDM and cured by UV. Likewise, EP-A-0,454,359 discloses photocurable block copolymer compositions that are used for sealants, coatings and moulded objects and that are liquid in nature (i.e., as an easily workable solution or alternatively as a homogeneous mixture). JP-A-2002/060,407 is another example of a liquid composition. Moreover, in both references relatively high amounts of monomer are used.

None of these publications offers a solution to the problem of printing plates mentioned hereinbefore. Indeed, either the system does not exhibit sufficient swelling resistance whilst keeping sufficient softness, or the liquid system does not possess the required solid behavior (dimensional stability) required for the shaping and/or storage stage.

There is thus still a need to develop a solid curable polymeric composition that permits to find a solution to the above drawbacks, particularly the swelling problem.

## Summary of the invention

Surprisingly, it has been found that well chosen reactive compounds, once added to the above mentioned thermoplastic block copolymers, can behave as a processing aid during the processing phase, as a rubber plasticiser aid without negative dissolving effects at room temperature allowing to keep the solid behavior of the polymer in those conditions and finally as a compatible stable cured rubber after polymerization. With these solid curable polymeric compositions it was possible to prepare printing plates for the flexographic printing which do no longer swell or have only a low swelling.

Accordingly, the present invention relates to a solid curable polymeric composition comprising

(i) a thermoplastic block copolymer containing at least two polymer blocks A separated by at least one polymer block B, wherein each polymer block A is primarily a poly(monovinyl aromatic hydrocarbon) block, and polymer block B is primarily a saturated elastomeric hydrocarbon polymer block;

(ii) from 10 to 60 percent by weight, relative to the total weight of polymer block B and all compounds compatible therewith selected from (ii), (iii), (v) and (vii), but less than 1.5 times the amount in weight/weight compared of thermoplastic block copolymer (i) of

* a polymerisable monofunctional compound (I) compatible with polymer block B or
* a composition (II) of polymerisable functional compounds which composition (II) is compatible with polymer block B and comprises at least one monofunctional compound

(I) and up to 30 percent by weight on the composition (II) of one or more multifunctional curable compounds (III), and wherein said polymerisable monofunctional compound (I) or said composition (II) has a solubility parameter in the range of 15.3 to 17.8 $(MPa)^{1/2}$}: (according to the standards ISBN 0-471-81299.7);

(iii) optionally up to 15 parts by weight per 100 parts by weight of component (ii) of an initiator that is at least partially compatible with the polymer block B and/or component (ii);
(iv), optionally a polyolefin polymer;
(v) optionally up to 400 parts by weight per 100 parts by weight of polymer blocks B of a plasticiser compatible with polymer block B and incompatible with polymer blocks A;
(vi) optionally an aromatic resin compatible with polymer blocks A and incompatible or only partially compatible with polymer block B, and
(vii) optionally up to 200 parts by weight per 100 parts by weight of polymer blocks B of a tackifying resin compatible with polymer blocks B and mostly incompatible with end block A.

The "solid curable polymeric composition" may be distinguished from a liquid system by its viscoelastic behaviour. For instance a liquid system will have a viscoelasticity as measured by DMA of less than 1000 Pa.s, whereas that of a solid will be more than 10,000 Pa.s and a tangent delta below 1. The latest criteria means that the viscoselastic material is more elastic (like solids) than viscous (like liquids) at 1Hz with 0.1% deformation at 25°C (like with RDAII from Rheometrics).

The polymerisable monofunctional compound (I) is at least partially compatible, preferably compatible, with polymer block B. Upon curing, the monofunctional polymerisable compound forms a resin that is.typically compatible with polymer block B and preferably imparts good high temperature properties on the cured polymeric composition. In one preferred embodiment, the cured polymeric composition is typically still thermoplastic.

For the purposes of this specification, the compatibility between two ingredients can be assessed via the transparency and macroscopic homogeneity of a mixture of the two considered ingredients at their weight ratio used in the formulation and at room temperature. Such mixture is said to be compatible if transparent and without any bleeding out or macroscopic separation of one ingredient from the mixture. At the opposite, two ingredients are said to be incompatible if the said mixture exhibits a non-transparent (i.e. milky) appearance and/or if at least one ingredient has a macroscopically evident tendency to bleed out of the mixture. This compatibility concept has been described in US-A-3,917,607, and US-A-5,472,824.

For the purpose of this specification, an ingredient is defined as 'B phase ingredient' if it is compatible with the mid block B or at least if it is compatible with a mixture composed of B block and of the B compatible ingredients in the ratio existing in the considered formulation.

The present invention further relates to a process for the preparation of a solid cured polymeric composition, which comprises e.g. radically polymerizing the polymerisable monofunctional compound(s) in the curable polymeric composition.

The present invention further relates to a solid cured polymeric composition, obtainable by curing the curable polymeric composition as described herein. In addition, the present invention relates to articles containing the solid curable polymeric composition, or the cured polymeric composition. According to a preferred embodiment the article is a printing plate used in flexographic printing having the advantage of not/low swelling and good UV and ozone resistance.

## Detailed description of the invention

Polymer block A is primarily a poly(monovinyl aromatic hydrocarbon) block. For the purposes of this invention "primarily" means in relation to polymer block A, that the polymer block A is composed of at least 75% by weight, preferably at least 90% by weight of monovinyl aromatic hydrocarbon. The remainder of the block is typically a polymerized olefinic monomer (which definition includes other vinyl compounds and dienes). More preferably, polymer block A is substantially composed of the same polymerized monomer, that is, more preferably, polymer block A is composed of at least 95% by weight of a monovinyl aromatic hydrocarbon. Most preferably, polymer block A is composed of 100% by weight of monovinyl aromatic hydrocarbon.

Preferably, the monovinyl aromatic hydrocarbon is chosen from the group of styrene, $C_1$-$C_4$ alkylstyrene and $C_1$-$C_4$ dialkylstyrene, in particular styrene, $\alpha$-methylstyrene, o-methylstyrene or p-methylstyrene, 1,3-dimethylstyrene, p-tert.-butylstyrene or mixtures thereof, more preferably styrene or $\alpha$-methylstyrene, most preferably styrene.

Polymer block B is a saturated elastomeric hydrocarbon polymer block. It may be a polyolefin to which blocks A have been grafted. Preferably, polymer block B is based on a hydrogenated primarily poly(conjugated diene) block. For the purposes of this invention "primarily" means in relation to polymer block B that the polymer block B, before hydrogenation, is composed of at least 70% by weight, preferably at least 90% by weight of a conjugated diene. The remainder of the block is monovinyl aromatic hydrocarbon. More preferably, polymer block B is substantially composed of the same polymerized monomer, that is, more preferably, polymer block B, before hydrogenation is composed of at least 95% by weight of an conjugated diene. Most preferably, polymer block B is composed of 100% by weight of a hydrogenated poly(conjugated diene) block.

Preferably, the conjugated diene is chosen from conjugated dienes containing from 3 to 24 carbon atoms, more

preferably from 3 to 8 carbon atoms, in particular butadiene or isoprene. If the conjugated diene is butadiene it is preferred to polymerize a substantial part of the butadiene via 1,2-addition rather than 1,4-addition. Preferably, the amount of butadiene that is polymerized via 1,2-addition is at least 25% of the total amount of polymerized butadiene. In other words, the so-called 1,2-vinyl content prior to hydrogenation is preferably at least 25%, more preferably in the range from 30 to 90%. According to preferred embodiments the saturated elastomeric hydrocarbon block is a copolymer of ethylene-butylene or ethylene-propylene.

In the selectively hydrogenated block copolymer to be used in the polymeric composition of the present invention, typically at least 80%, preferably at least 90%, more preferably at least 95%, in particular at least 99% of the diene double bonds in the poly(conjugated diene) block(s) is hydrogenated. The hydrogenation degree can be analyzed using the nuclear magnetic resonance (NMR) method. Preferably not more than 25% by weight, more preferably not more than 10%, in particular not more than 5% of any monovinyl aromatic hydrocarbon is hydrogenated.

The block copolymer typically has the structure A-B-A, A-B-A', A-B-A'-B', (A-B)nX or (A-B)pX(B'(-A')r)q, wherein X is the residue of a coupling agent, A' and B' are polymer blocks of the same or different molecular weight as polymer blocks A and B respectively and polymer blocks A' and B' are selected from the same group of chemical compounds as polymer blocks A and B respectively; $n \geq 2$; $p \geq 1$; r is 0 or 1; $q \geq 1$; and $(r^*q + p) \geq 2$. Preferably, $n \leq 100$ and $(p + q) \leq 100$; more preferably $n \leq 20$ and $(p + q) \leq 20$; in particular $n \leq 6$ and $(p + q) \leq 6$.

Preferably, the polymer blocks A comprise from 5 to 90% by weight of the block copolymer, more preferably from 10 to 60% by weight, even more preferably from 10 to 45% by weight, in particular from 13 to 35% by weight.

The polymer blocks A typically have a weight average molecular weight in the range from 3,000 to 100,000; preferably from 4,000 to 60,000; more preferably from 5,500 to 15,000 g/mol.

The polymer blocks B typically have a weight average molecular weight in the range from 10,000 to 300,000; preferably from 30,000 to 180,000; more preferably from 35,000 to 100,000 g/mol.

The total block copolymer typically has a weight average molecular weight in the range from 16,000 to 1,000,000; preferably from 25,000 to 900,000. If the block copolymer is linear, more preferably the weight average molecular weight is in the range from 30,000 to 200,000, in particular in the range from 35,000 to 150,000. If the block copolymer is radial, more preferably the weight average molecular weight of each arm is in the range 10,000 to 100,000 and the total weight average molecular weight is in the range 35,000 to 500,000.

Weight average molecular weight as referred to herein is real weight average molecular weight in gr/mole. It is re-calculated, taking into account the actual chemical composition of the polymer, its structure and the precise measurement of the real A blocks molecular weight determined by gel permeation chromatography in accordance with ASTM D 3536 using pure A homopolymer standards.

The block copolymer may be a blend of block copolymers and/or may contain up to 80% by weight of a diblock copolymer containing one polymer block A and one polymer block B, basis the total block copolymer content. The preferred amount of diblock copolymer very much depends on the targeted end-use. Thus, if for instance it is desired to provide a tacky adhesive composition or a low elongation at break sealant, the desired amount of diblock copolymer may be rather high. Preferably, the diblock copolymer content, if any, is not more than 40% by weight, more preferably not more than 30% by weight. According to one embodiment, the block copolymer does not contain diblock copolymer.

As outlined before, the block copolymer may be prepared by any method known in the art and is typically be prepared by anionic polymerization. For example, the block copolymer may be prepared by anionic polymerization using the well-known full sequential polymerization method, optionally in combination with re-initiation, or the coupling method. Anionic polymerization of block copolymers is well known in the art and has e.g. been described in US patent specification Nos. 3,595,942; 3,322,856; 3,231,635; 9,077,893; 4,219,627; and 4,391,949, and International and European patent application publication Nos. EP 0413294, EP 0387671, EP 0636654, and WO 94/22931, incorporated herein by reference.

To prepare a saturated hydrocarbon polymer block B via anionic polymerization, typically first a conjugated diene is polymerized and the olefinic unsaturation selectively hydrogenated using hydrogenation catalysts. Selective hydrogenation of conjugated dienes is also well known in the art and has e.g. been described in US patent specification Nos. 3,595,942, 3,700,633, 5,925,717; 5,814,709; 5,886,107; and 5,952,430, incorporated herein by reference.

Techniques to enhance the vinyl content of the butadiene portion are well known and may involve the use of polar compounds such as ethers, amines and other Lewis bases and more in particular those selected from the group consisting of dialkylethers of glycols. Most preferred modifiers are selected from dialkyl ether of ethylene glycol containing the same or different terminal alkoxy groups and optionally bearing an alkyl substituent on the ethylene radical, such as monoglyme, diglyme, diethoxyethane, 1,2-diethoxy-propane, 1-ethoxy-2,2-tert-butoxyethane, of which 1,2-diethoxypropane is most preferred.

The polymerisable monofunctional compound (I) can suitably be any compound that satisfies the above criteria. It is thought that the solubility parameter of the polymerisable monofunctional compound is typically close to the solubility parameter of polymer block B.

The solubility parameter is well known tc those skilled in the art and has been described in Polymer Handbook' third edition (1989) edited by J. BPANDRUP and E.H. IMMERGUT, John Wiley & Sons (ISBN 0-471-81244-7), incorporated herein by reference. The book describes a group contribution method, which can be used to estimate the solubility parameter of chemical compounds based on the knowledge of their chemical structure and their density. Solubility parameters calculated using the group contribution method and using the measured densities listed in the same book are in MPa)$^{1/2}$ {(cal/cm$^3$)$^{1/2}$} amorphous polystyrene: 18.44 {9.02}; amorphous polyethylene: 16.89 {8.26}; amorphous polypropylene: 15.89 {7.77}; amorphous polybutene-1:16.13 {7.89}, rubber polymers such as. Ethylene /Butylene: 16.36 (8.0).

Typically, the solubility parameter of the polymerisable monofunctional compound should be in the range from 15.3 to 17.8 (MPa)$^{1/2}$ {7.5 to 8.7 (cal/cm$^3$) $^{1/2}$} .

The polymerisable monofunctional compound (I) must be at least partially compatible and is preferably compatible with polymer block B. The polymerisable monofunctional compound (I) may be chosen from the group of acrylic esters and methacrylic esters of in-alkyl with the alkyl chain containing from more than five up to thirty carbon, atoms, preferably from 8 to 15 carbon atoms such as for example octyl acrylate; the group of acrylic esters and methacrylic esters of secondary or branched chain alkyls where the alkyl chain contain from more than three up to thirty carbon atoms, preferably from five up to fifteen carbon atoms such.2-ethylhexyl acrylate and isodecyl acrylate, lauryl methacrylate, isobornyl (meth) acrylate; and mixtures thereof.

For the purposes of this specification, "compatible" is defined as outlined herein above.

The relative amounts of the various compounds of the composition should be chosen such as to produce a solid compound. For instance, using a relatively high molecular weight block copolymer as component (i), a relatively large amount of polymerisable monofunotional compound (I) or composition (II) may be present, as well as a relatively large amount of other components compatible with polymer block B.

The polymerisable monofunctional compound (I) or composition (II) is present in an amount such that the weight percentage of thereof is in the range from 10 to 60, preferably from 15 to 50 percent by weight relative to the total weight of polymer block B and all compounds compatible therewith. On the other hand, the polymerisable monofunctional compound (I) or composition (II) should be present in an amount less than 1.5 times the amount in weight/weight of the thermoplastic block copolymer (i), preferably less than the amount the amount in weight/weight of the thermoplastic block copolymer (i).

According to a preferred embodiment wherein block B is a copolymer of the ethylene-propylene type and has a solubility parameter around 16.35 {8.0}, the polymerisable monomer compound has a solubility parameter between 15.3 and 17.8 (MPa)$^{1/2}$ {7.5 to 8.7 (cal/cm$^3$)$^{1/2}$

Any polymerisable monofunctional monomer compound meeting these solubility criteria is suitable for the purpose of the present invention. Without willing to be limited to the following examples, the preferred polymerisable monofunctional monomers are listed here above.

According to another embodiment of the invention the solid curable polymeric composition comprises optionally a multifunctional curable compound (III) as described in patent US 4, 151, 057. and in an amount such that the mixture of compounds (I) and (II) is still compatible with B block polymers and has still a weight averaged solubility parameter in the range from 15.3 to 17.8 (MPa)$^{1/2}$ {7.5 to 8.7 (cal/cm$^3$)$^{1/2}$}. This multifunctional curable compound (III) may be selected from trimethylolpropane triacrylate, hexane diol diacrylate or any other advocated in the patent US 4,151,057 and represents typically less than 30% of the total curable polymerisable compounds,

According to one embodiment, the curable polymeric composition is still thermoplastic after curing. Thus, a thermoplastic polymeric composition can be prepared that is still processable at high temperatures. Accordingly, a thermoplastic composition can now been provided that is easily processable prior to curing, and after curing is still processable and has certain improved properties such as a higher temperature resistance and a better solvent resistance. The processability of the polymeric composition after curing is considered important e.g. from an environmental point of view as it allows recycling of the polymeric composition.

The curable polymeric composition of the present invention may comprise an initiator. The initiator should be at least partially compatible with the polymer blocks B and/or the polymerisable monofunctional compound (I) or composition (II).

Examples of suitable initiators include photo-initiators and thermal initiators, that is, radical initiators which decompose at a certain temperature to form radicals.

Examples of such thermal radical initiators are peroxide compounds and azo compounds. Many of such compounds are well known in the art and available commercially. Specific compounds differ in the temperature at which they decompose to form radicals. It is important to know the half-life of the thermal radical initiator for determining its useful temperature range. Thus, e.g. the temperature at which the half-life $t_{1/2}$ of benzoyl peroxide is one hour is 91°C and the temperature at which the half-life is ten hours is 71°C. For t-butyl perbenzoate the temperature is 125°C or 105°C for $t_{1/2}$ being 1 hour or 10 hours respectively. For 1,1'-azobis-(cyclohexanecarbonitrile) the temperature is 105°C or 88°C for $t_{1/2}$ being 1 hour or 10 hours respectively.

A skilled person will have no problem selecting an appropriate thermal radical initiator, with the appropriate half-life at the right temperature. As will be discussed in more detail herein after, care should be taken that the thermal

radical initiator is used at a temperature that is below the order-disorder transition temperature of the block copolymer in the polymeric composition.

Azo compounds and peroxy compounds have been discussed in detail in the Encyclopedia of Polymer Science and Engineering, John Wiley & Sons (1988), volume 2, pages 143-157 and volume 11, pages 1-21 respectively, incorporated herein by reference. It is expected that a particular useful group of thermal radical initiators are those initiators that are commonly used in the radical polymerization of styrene to manufacture of polystyrene. Examples of commercially available compounds are (see also volume 16, page 26 of the above encyclopedia): 2,2'-azobis(isobutyronitrile); 2, 2' -azobis (2, 4-dimethylvaleronitrile); 1,1'-azobis-(cyclohexanecarbonitrile); benzoyl peroxide; t-butyl 2-methylperbenzoate; dicumyl peroxide; t-butyl cumyl peroxide; di-t-butylperoxide; 1,1-di(t-butyl-peroxy)-3,3,5 -trimethylcyclohexane; dilauroyl peroxide; di(2-ethylhexyl)peroxydicarbonate; t-amyl peroctoate; t-butyl peracetate; t-butyl perbenzoate; 2,5-bis (benzoyl-peroxy)-2,5-dimethylhexane; di-t-butyldiperoxyazelate; and 1,1-di(t-butylperoxy)cyclohexane.

According to one preferred embodiment, the radical initiator is a photo-initiator. Photo-initiators are known in the art and examples of suitable photo-initiators have been disclosed in European patent specification No. 0 696 761 and US patent Nos. 4,894,315; 4,460,675 and 4,234,676. Typically, the photo-initiator is selected from optionally substituted polynuclear quinones, aromatic ketones, benzoin and benzoin ethers and 2,4,5-triarylimidazolyl dimers.

The photo-initiator is preferably selected from the group consisting of:

(1) a benzophenone of the general formula (I)

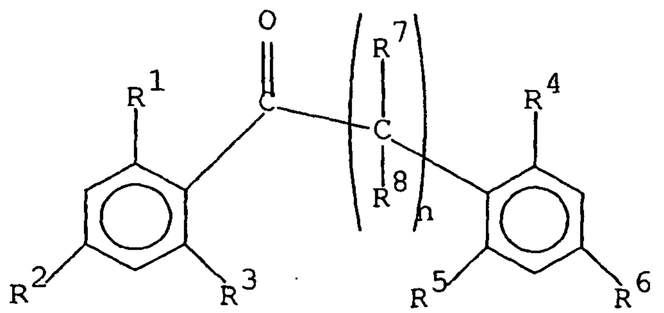

(I)

wherein $R^1$ to $R^6$ independently represent hydrogen or an alkyl group having from 1 to 4 carbon atoms, preferably methyl, and wherein $R^7$ and/or $R^8$ have the same meaning as $R^1$ to $R^6$ or represent in addition alkoxy or 1 to 4 carbon atoms and wherein n has a value of 0, 1, or 2, optionally in combination with at least one tertiary amine,

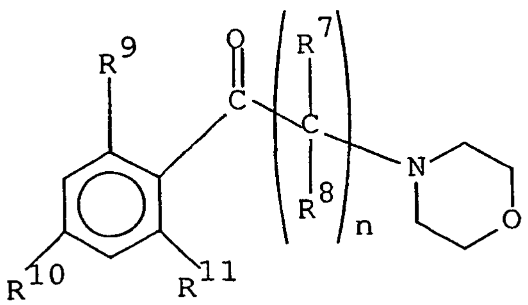

(II)

(2) a sulphur-containing carbonyl compound, wherein the carbonyl group is directly bound to at least one aromatic ring and is preferably of the general formula II wherein $R^9$, $R^{10}$, and $R^{11}$ each may represent hydrogen, alkyl of 1 to 4 carbon atoms, or an alkylthio having 1 to 4 carbon atoms, and

(3) mixtures of (1) and (2).

Examples of suitable compounds of category (1) are benzophenone, 2,4,6-trimethylbenzophenone, 4-methylbenzophenone, and eutectic mixtures of 2,4,6-trimethylbenzophenone and 4-methylbenzophenone (ESACURE TZT), or 2,2-dimethoxy-1,2-diphenylethan-1-one (IRGACURE 651)(ESACURE and IRGACURE are trademarks). These compounds may be employed in combination with tertiary amines, such as e.g. UVECRYL 7100 (UVECRYL is a trademark). Category (2) embraces compounds such as, e.g., 2-methyl-1-[4-(methylthio)phenyl]-2-morpholinopropanone-1, commercially available as IRGACURE 907. An example of suitable mixtures (category (3)) is a mixture of 15 percent by weight of a mixture of 2-isopropylthioxanthone and 4-isopropylthioxanthone, and 85 percent by weight of a mixture of 2,4,6-trimethylbenzophenone and 4-methylbenzophenone. This mixture is commercially available under the trade name ESACURE X15. Photo-initiators of any one of the above categories (1), (2), and (3) may also be used in combination with other photo-initiators, such as e.g. UVECRYL P115 (a diamine). Particularly useful is a combination of benzophenone or IRGACURE 651 and said UVECRYL P115

In a more preferred embodiment of the present invention the photo-initiator is selected from the group consisting of (i) benzophenone, or 2,2-dimethoxy-1, 2-diphenylethan-1-one (IRGACURE 651), (ii) a mixture of benzophenone or IRGACURE 651, and a tertiary amine, and (iii) 2-methyl-1-[4-(methylthio)-phenyl]-2-morpholino-propanone-1. Of these 2-methyl-1-[4-(methylthio)phenyl]-2-morpholinopropanone-1 or 2,2-dimethoxy-1,2-diphenyl-ethan-1-one are most preferred.

Typically, the photo-initiator is present in an amount from 0.005 to 15 parts by weight per 100 parts by weight of component (ii), preferably from 0.1 to 5 parts by weight.

According to another embodiment the well known electron beam curing could be used in which case initiators are not necessary.

The curable polymeric composition as described herein may further comprise an aliphatic or cycloalipnatic diluent (processing aids, plasticisers, liquid resins), or a mixture of diluents, compatible with polymer blocks B and mostly incompatible with end block A.

Examples of suitable aliphatic and cycloaliphatic diluents are: paraffinic process oils (e.g. CATENEX SM925); naphthenic oils; fully or highly hydrogenated process oils (e.g. ONDINA N68 or PRIMOL 352); waxes; liquid hydrogenated aromatic resins (e.g. REGALITE R1010); liquid polyalphaolefins (e.g. DORASYN 166); and liquid polymers such as hydrogenated polyisoprene, hydrogenated polybutadiene or polybutene-1 (CATENEX, ONDINA, PRIMOL, REGALITE and DURASYN are trademarks) .

The diluents, if present, may typically be present in an amount up to 400 parts by weight per "100 parts by weight of polymer blocks B", depending on the end-use application. In general, the amount of diluent will be in the range from 20 to 400 parts by weight.

In addition, or alternatively, the curable polymeric composition may further comprise a tackifying resin compatible with polymer blocks B and mostly incompatible with end block A. Tackifying resins are well known to those skilled in the art. A wide variety of different tackifying resins are available commercially. The tackifying resin to be used in the present invention is preferably a partially or fully hydrogenated aliphatic hydrocarbon resin or hydrogenated rosin ester or a partially or fully hydrogenated aromatic hydrocarbon resin.

Specific examples of suitable tackifying resins are: hydrogenated styrene-based resins such as REGALREZ resins designated as 1018, 1033, 1065, 1078, 1094 and 1126; REGALREZ 6108, a 60% hydrogenated aromatic resin; hydrogenated tackifying resins based on $C_5$ and/or $C_9$ hydrocarbon feedstocks such as ARKON P-70, P-90, P-100, P-125, P-115, M-90, M-100, M-110 and M-120 resins and REGALITE R-100, MGB-63, MGB-67, and MGB-70 resins; hydrogenated Polycyclopentadienes such as ESCOREZ 5320, 5300 and 5380 resins; hydrogenated polyterpene and other naturally occurring resins such as CLEARON P-105, P-115, P-125, M-105 and M-115 resins and EASOTACK H-100, H-115 and H-130 resins (REGALREZ, ARKON, ESCOREZ, CLEARON and EASOTACK are all trademarks).

The tackifying resin typically has a softening point as determined by the Ring and Ball method (ASTM E 28) of at least 70°C, preferably in the range of from 75 to 125 C, more preferably 80 to 105°C.

According to a particularly preferred embodiment, the tackifying resin is a fully hydrogenated hydrocarbon resin.

The tackifying resins, if present, may typically be present in an amount of up to 500 parts by weight per "100' parts by weight of polymer blocks B", depending on the desired end-use application. In general, the amount of tackifying resin, if present, will be in the range from 10 to 200 parts by weight.

The curable polymeric composition, optionally comprising tackifying resins and/or diluents, may be blended with a polyolefin. Examples of suitable polyolefins are polyethylene, polypropylene, polybutene-1, copolymers of these polyolefins, EPDM and other polyolefin elastomers, including those lower density polyolefins made with so-called metallocene catalysts.

The polyolefins, if present, may typically be present in an amount of up to 2500 parts by weight per "100 parts by weight of polymer blocks B", depending on the desired end-use application.

If polyolefins are present in an amount such that they form the matrix of the blend with the curable polymeric composition, a thermoplastic blend may be produced upon curing of the curable polymeric composition, even if the said composition as such would be thermoset after curing.

It is contemplated that a thermoplastic vulcanizate can be formed by dynamic vulcanization (curing) of the curable polymeric composition, whilst blending with a polyolefin in an extruder. This is especially of interest when high molecular weight (Mw > 160,000 g/mol) block copolymers are used.

Therefore, the present invention further relates to a thermoplastic blend comprising from 10 to 2500 parts by weight, preferably from 15 to 100 parts by weight, of a polyolefin per 100 parts by weight of a curable polymeric composition

or a cured polymeric composition as described herein. Preferably, the polymeric composition as such is thermoset after curing.

Stabilisers such as antioxidants/UV stabilisers/radical scavengers may in addition be present in the curable polymeric composition.

Especially hindered phenols, organo-metallic compounds, aromatic amines, aromatic phosphites and sulfur compounds are useful for this purpose. Preferred stabilisers include phenolic antioxidants, thio compounds and tris (alkyl-phenyl) phosphites.

Examples of commercially available antioxidants/radical scavengers are pentaerythrityl-tetrakis (3,5-di-tert-butyl-4-hydroxy-hydrocinnamate) (IRGANOX 1010); octadecyl ester of 3,5-bis (1,1-di-methylethyl)-4-hydroxy benzene propanoic acid (IRGANOX 1076); 2,4-bis (n-octylthio)-6-(4-hydroxy-3,5-di-tert-butylanilino)-1,3,5-triazine (IRGANOX 565); 2-tert-butyl-6-(3-tert-butyl-2'-hydroxy-5-methylbenzyl)-4-methylphenyl acrylate (SUMILIZER GM); tris (nonylphenyl)phosphite; tris (mixed mono- and di-phenyl)-phosphite; bis (2,4-di-tert-butylphenyl)-pentaerythritol diphosphite (ULTRANOX 626); distearyl pentaerythritol diphosphite (WESTON 618); styrenated diphenylamine (NAUGARD 445); N-1,3-dimethylbutyl-N'-phenyl-paraphenylenediamine (SUMILIZER 116 PPD); tris (2,4-di-tert-butylphenyl) phosphite (IRGAFOS 168); 4,4-butylidene-bis-(3-methyl-6-tert-butylphenol) (SUMILIZER BBMS) (IRGANOX, SUMILIZER, ULTRANOX, WESTON, NAUGARD and IRGAFOS are trademarks).

The stabiliser(s) is(are) typically present in the curable polymeric composition in a total amount from 0.01 to 5% by weight, basis the total curable polymeric composition, preferably 0.2 to 3% by weight.

Other well-known components that may be present include polymerisation inhibitors, anti-ozonants, colorants, fillers or reinforcing agents. It belongs to the skill of the skilled person to select the appropriate additional components in the appropriate amounts.

The curable polymeric composition can further comprise end block resins and fillers.

If a photo-initiator is present, the curable polymeric composition is cured by actinic radiation. This can be daylight or an artificial actinic radiation source. Usually, the photo-initiator used is most sensitive in the ultraviolet range. Therefore, preferably, the artificial radiation source should furnish an effective amount of this radiation, more preferably having an output spectrum in the range from 200 to 500 nm, even more preferably in the range from 230 to 450 nm. Particularly suitable UV sources are FUSION bulb lamps having output maxima at 260-270 nm, 320 nm and 360 nm ("H" bulb), at 350-390 nm ("D" bulb) or at 400-430 nm ("V" bulb) (FUSION is a trademark). Combinations of these FUSION bulb lamps may also be used. H and D bulb lamps are particularly useful, while a combination of D bulb and H bulb can also be suitably applied.

A further example of a suitable source of UV radiation is a mercury-vapor lamp such as a 300 W/inch (300 W/2.5 cm) UV mercury medium pressure lamp from American UV Company.

The cured polymeric composition can be used in many end-use applications where e.g. a better temperature or solvent resistance is required and/or there is a need for easier processing of the polymeric composition. In addition, it is expected to obtain better specific adhesion on polar substrates due to the existence of polar group present in the monofunctional and eventually multifunctional curable monomers.

Typical end-use applications include rubbery compounds for a variety of applications, rubbery compounds for printing plates, polymer modification and adhesives.

Therefore, the present invention further relates to articles containing the curable polymeric composition as described herein; or the cured polymeric composition (or the block copolymer) as described herein.

The invention will now be further described with reference to the following Examples.

## Examples

Block copolymers (bc) that were used in the experiments as ingredient (i) according to the invention are described in the following table :

Table (i)

| Block copolymer name: | bcA | bcB |
|---|---|---|
| 'A block' nature | PS* | PS* |
| 'B block' nature | EB** | EP*** |
| 'A block' content (%w) | 30 | 7 |
| 'B block' content (%w) | 70 | 93 |
| Main structure | A-B-A | (A-B)nX |
| n | / | ≅ 8 |
| 'A block' Mw (gr/mole) . | 10,000 | 3,500 |

Table continued

| Block copolymer name: | bcA | bcB |
|---|---|---|
| A-B content (%w) (diblock) | / | 10. |
| Main structure Mw (gr/mole) | 67,000 | 400,000 |
| Rubber Sol. Param. $(MPa)^{1/2}$ | 15.56 | 16.29 |
| $(cal/cm^3)^{1/2}$ | (8.1) | (7.97) |
| * PS : Polystyrene<br>** EB : Ethylene-Butylene block, here hydrogenated polybutadiene block<br>*** EP : Ethylene-propylene block, here hydrogenated polyisoprene block. | | |

The following ingredients were used as component (ii) : octyl-decyl acrylate (ODA); tridecyl acrylate (TDA) and Isobornyl Acrylate (IBOA). The following table (ii) presents the calculated 'SMALL' solubility parameter δ for the various ingredients and the difference with the solubility parameter of polystyrene and of a fully hydrogenated 1,4 polyisoprene or ethylene/propylene (40/60).

Table (ii)

| Ingredients | | ODA | TDA | IBOA |
|---|---|---|---|---|
| Calculated δ | (MPa) 1/2 | 17.17 | 17.15 | 7.6. 91 |
| | $(cal/cm^3)^{1/2}$ | 8.40 | 8.39 | 8.27 |
| $\delta_{Ing}$-δ(PS) | $(MPa)^{1/2}$ | -1.33 | -1.35 | -1.57 |
| | $(cal/cm^3)^{1/2}$ | -0.65 | -0.66 | -0.77 |
| $\delta_{Ing}$-δ(EP) | $(MPa)^{1/2}$ | +0.88 | +0.86 | +0.61 |
| | $(cal/cm^3)^{1/2}$ | +0.43 | +0.42 | +0.3 |
| EP rubber 50/50 compatibility | | High | High | High |

Other reactive ingredients description

IRGACURE 651 (2,2-dimethoxy-1,2-diphenylethan-1-one) has been used as UV sensitive photo-initiator. LUPEROX 101 peroxide has been used as thermally induced curing initiator.

Co-curing cross-linkers : hexanediol diacrylate monomer (HDDA), EPDEM Trilene 67 oligomer.

| Ingredients | | HDDA | trilene 67 |
|---|---|---|---|
| Calculated δ | $(MPa)^{1/2}$ | 18.69 | 16.13 |
| | $(cal/cm^3)^{1/2}$ | 9.14 , | 7.99 |
| $\delta_{Ing}$=δ(EP) | $(MPa)^{1/2}$ | +2.39 | +0.04 |
| | $(cal/cm^3)^{1/2}$ | +1-17 | +0.02 |
| PS compatiblility | | high | No |
| EP compatibility | | no | Good |

Other ingredients:

Paraffinic white oil: PRIMOL 352 (esc. Exxon); Naphtenic white oil: ONDINA N68 (ex Shell); PolyPropylene Moplen EP2X29GK (ex. Basell); Antioxidant: IRGANOX 1010 (ex. Ciba)

Example I

This first example demonstrates the combination of both easy processing before curing and temperature performance of the cured systems according to the invention. Two comparative diluents were evaluated in combination with the same styrenic block copolymer bcA. The ingredients presented in table 1 were mixed in several steps. The photoinitiator was first mixed in the liquid diluent. This premix was then 'dry mixed' with the block copolymer powder.

Finally this premixed compound was fed and mixed at 120°C or 140°C in a Brabender internal mixer. The experienced torque was recorded at constant rotational speed. Those torque values give a good indication on the formulation viscosity (at same rotational speed, the higher the torque the higher the viscosity). The resulting formulations were then pressed in +/- 2mm thick plates. The resulting plates were cured by 20 passes at 10 m/minute under a 300 W/2.5cm (300 W/inch) UV lamp. The cured samples were measured in Hardness shore A. Cured samples of measured weights (Winitial) were then immersed and agitated in toluene for 24 hours at room temperature. The resulting systems were filtered with 10 mesh filters. The filtrate, if any, (a swollen gel) was then quickly weighed (Wswolen) then dried in air for 24hours and in a vacuum oven for one hour. The weight of this dried sample was recorded as dried weight (Wdried). The toluene Insolubles and Swelling are then calculated using following equations:

$$\text{Toluene Swelling} = \text{Wswolen}/\text{Wdried}$$

$$\text{Toluene Insoluble} = \text{Wdried}/\text{Winitial}$$

The temperature resistance was assessed via the softening point (SP) temperature as measured on the Koffler bank.

Table 1

| Ingredients | I/1 | I/2# | I/3# | 1/4 | 1/5. |
|---|---|---|---|---|---|
| (i) bcA | 20 | 20 | 20 | 20 | 20 |
| (ii) TDA | 15 | | | 13 | 8 |
| HDDA | | 15 | | 2 | 2 |
| Trilene | | | | | 5 |
| Primol 352 | | | 15 | | |
| Irgacure 651 | 0.3 | 0.3 | 0.3 | 0.3 | 0.3 |
| Irganox 1010 | 0.1 | 0.3 | 0.3 | | |
| Mixing T (°C) | 120 | 120 | 140 | 140 | 140 |
| Melt T (°C) | 125 | 120 | 148 | 143 | 143 |
| Torque (N.m) | 9.6 | 1.2 | 15 | 5.8 | 10.7 |
| Visual appearance | tr. | white | tr. | tr. | Tr. |
| Hardness (Shore A) | 44 | >90 | 36 | 55 | 54 |
| Toluene insoluble(%w) | 0 | 50 | 0 | 42 | 32 |
| Toluene swelling (%w) | / | 422 | / | 650 | 1120 |
| Koffler bank SP (°C) | 240 | n.m. | 180 | n.m. | n.m. |
| Appearance | flex. | br. | flex. | flex. | Flex. |
| Monomer Sol. Param. (MPa)$^{1/2}$ (cal/cm$^3$)$^{1/2}$) | 17.15 8.39 | 18.69 9.14 | / | 17.36 8.49 | 17.46 8.54 |
| Monomer content in the 'B phase' (%w) | 51 | 0 | 0 | 51 | 34 |
| Monomer content (%w) | 42 | 42 | 0 | 42 | 28 |
| # = not according to the invention tr. = transparent n.m. : non measured br. = brittle flex. = flexible . | | | | | |

The formulation I/1 is according to the invention containing a hydrogenated block copolymer and a monofunctional monomer of good compatibility with the rubber phase. This system exhibits a low viscosity at 120°C, an excellent transparency both before and after curing, and presents after curing a good temperature resistance (SP=240°C) while

maintaining a thermoplastic behavior.

In comparison, the formulation 1/2 contains a monomer mostly insoluble with the EB rubber. In the mixer, this system appears inhomogeneous leading to a abnormally low viscosity and a white color. After curing, this system becomes hard and brittle. The formulation 1/3 contains a non-reactive plasticiser: a mineral white oil. The system is transparent demonstrating the good compatibility of the full system. The measured torque indicates a significantly higher viscosity compared to I/1. Once cured, this I/3 system presents a drastically lower temperature resistance versus I/1.

The I/4 and I/5 systems make use of a combination of a majority of monofunctional monomer modified by a minority of bifunctional monomers. Both systems are transparent and exhibit low viscosity. Interesting combination of hardness, low toluene swelling and gel content are achieved.

Example 2

This example demonstrates the necessity to add more than 3%w of (ii) .

The drop point temperature was measured by placing the sample in a cup containing a hole at the bottom, which is 0.28 cm in diameter. The sample was heated at a rate of 5 C/min. The temperature at which a drop of sample flows through the hole of the cup is called the drop point temperature. A very similar test is described in ASTM D3104-87: test method for softening point of pitches (Metler softening point method). In order to measure the drop point of cured systems, the uncured system were put in cups and the cups were then irradiated in the same way as the films.

Experiments:

Table II

| Ingredients, | II/1# | II/2# | II/3# |
|---|---|---|---|
| (i)bcA block copolymer | 10. | 10 | 10 |
| (ii)ODA | 3 | | 89 |
| ONDINA 1468 | 86.7 | 90 | |
| IRGACURE 651 | 0.3 | . | 1 |
| Monomer Sol. Param. | 17.17 | / | 17.17 |
| $(MPa)^{1/2}$ $\{(cal/cm^3)^{1/2}\}$ | 8.4 | | 8.4 |
| Monomer content in the 'B phase' (%w) : | 3.1 | 0 | 92 |
| Monomer content (%w) | 3 | 0 | 89 |
| Uncured appearance (23°C) | tr. gel | tr. Gel | tr. Liquid |
| Cured appearance | tr. gel | tr. Gel | opaque gel |
| Uncured Drop Point (DPuc) | 80 °C | 87 °C | <25°C |
| Cured Drop Point (DPc) | B4 °C | 88 °C | 213°C |
| Tol. Swelling %w | / | / | 1071 |
| Tol. Insolubles %w | 0 | 0 | 69 |
| # = not according to the invention. | | | |

II/I containing 3%w of (ii) is indeed not leading to any improved temperature performance compare to the well known II/2 system. II/3 containing 89% of (ii) appears to be non-solid at room temperature which is not acceptable for the targeted applications. In addition II/3 loses its transparency during.the UV curing step.

Example 3

This example investigates the effect of the ingredient . (ii) content in combination with a high Mm bcB(i) on properties' like ease of mixing, hardness, gel content after curing. It also demonstrates the efficiency of those ingredients to reach easy processing, and high toluene insolubles, soft and rubbery compositions.. The mixing procedure as well as the curing and the test procedures are as described in example 1.

Experiments :

Table III

| Ingredients | III/1 | III/2 | III/3 | III/4 | III /5# | III/ 6# | III/ 7# | III/ 8# |
|---|---|---|---|---|---|---|---|---|
| (i)bcB | 30 | 25 | 20 | 20 | 30 | 25 | 20 | 20 |
| (ii)TDA | 5 | 10 | 15 | | | | | |
| (ii) IBOA | | | | 17.5 | | | | |
| HDDA | | | | | | | | 15 |
| PRIMOL 352 | | | | | 5 | 20 | 15 | |
| IRGACURE 651 | 0.3 | 0.3 | 0.3 | 0.3 | 0.3. | | | 0.3 |
| Mon. Sol. Par. | 17.13 | 17.13 | 17.13 | 16.91 | / | / | / | 18.68 |
| $(MPa)^{1/2}$ {*} | 8.39 | 8.39 | 8.39 | 8.27 | | | | 9.24 |
| Mon content (%w) | 14 | 28 | 42 | 46 | 0 | 0 | 0 | 42 |
| "B phase" Mon. content (%w) | 15 | 30 | 44 | 48 | 0 | 0 | 0 | 0 |
| Mixer T (°C) | 120 | 120 | 120 | 120 | 145 | 120 | 120 | 120 |
| Melt T (°C) | 134 | 129 | 122 | 123 | 157 | 128 | 124 | 120 |
| Torque (N.m) | 27 | 15 | 7.5- | 8 | 24 | 17.5 | 9.2 | <1 |
| Hard. (SA) | 44 | 36 | 30 | 70 | 43 | 30 | 19 | >90 |
| Tol. Insol. (%) | 92 | 83 | 88 | 41 | 4 | <5 | <5 | 93 |
| Tol Swel (%) | 2560 | 3312 | 3260 | 6260 | / | / | / | 467 |
| **#** = not according to the invention. * = $\{(cal/cm^3)^{1/2}\}$ | | | | | | | | |

Example 4

This example demonstrates the interest to add some multifunctional ingredients if those combined with the (ii) ingredients are compatible in the rubber. The mixing procedure as well as the curing and test procedures are as described in example 1. *

Table IV

| Ingredients | IV/1. | IV/2 . | IV/3# | IV/4# | IV/5 |
|---|---|---|---|---|---|
| (i)bcb | 20 | 20 | 20 | 30 | 30 |
| (ii)TDA | 15 | | | | 5 |
| (ii)IBOA | | 15 | | | |
| HDDA | 2.1 | 2.1 | 2.1 | 2.1 | 2.1 |
| PRIMOL 352 | - | | 15 | 5 | |
| IRGACURE 651 | 0.3 | 0.3 | 0.3 | 0.3 | 0.3. |
| Mon.Sol.Par. | 17.34 | 17.11 | 18.69 | 18.69. | 17.60 |
| $(MPa)^{1/2}$ {*} | 8.48 | 8.37 | 9.14 | 9.1.4 | 8.61 |
| Mon. content (%w) | 48 | 48 | 5.6 | 5.6 | 19 |
| "B phase" mon. content (%w) | 48 | 48 | 0 | 0 | 20 |
| Mixer T (°C) | 120 | 120 | 120 | 120 | 120 |
| Melt T. (°C) | 121 | 120 | 123 | 133 | 131 |
| Torque (N.m) | 6.4. | 8.3 | 8.7 | 28.3 | 27 |
| Hard. (SA) | 0s46. | 0s77 | 0s31 | 48 | 48 |
| Tol. Insol. (%) | 94 | 95 | 59 | 90 | 98 |

Table continued

| Ingredients | IV/1. | IV/2 . | IV/3# | IV/4# | IV/5 |
|---|---|---|---|---|---|
| Tol Swel.(%) | 690 | 926 | 2700 | 1600 | 2050 |
| **#** = not according to the invention. * = $(cal/cm^3)^{1/2}$ | | | | | |

Formulations IV/1 and IV/2 exhibit excellent balance low viscosity during processing, high insolubles and low swelling in toluene. They range from low to high but non brittle hardness once cured. Formulation IV/1,2,5 demonstrate the positive effect of the multifunctional' compound to reach high gel content if compatible with the rubber once combined with the (ii) ingredient. Comparative formulations IV/3,4 containing oil in place of (ii) clearly failed to reach very high gel content or/and very low swelling in toluene.

Example 5

Table V

| Ingredients | V/1# | V/2 |
|---|---|---|
| (i)bcA | 50 | 50 |
| (ii)TDA | | 25 |
| Oil | 30 | |
| TMPTA | | 5 |
| PP Moplen EP2X29GK | 20 | 20 |
| IRGACORE 651 | 0.85 | 0.85 |
| Mon.Sol.Par. $(MPa)^{1/2}$ | / | 17.48 |
| $\{(cal/cm^3)^{1/2}\}$ | | 8.55 |
| Mon. content (%w) | 0 | 30 |
| "B phase" mon. content (%w) | 0 | 45.5 |
| Mixer T (°C) | 190 | 160 |
| Melt T (°C) | 196 | 169 |
| Torque (N.m) | 6 | 5.7 |
| Appearance before curing | transparent | Transparent |
| Appearance After curing | transparent | Transparent |
| Hardness (SA) | 65 | 78 |
| Compression set 50°C, 24 hours | 56 | 51 |
| # = not according to the invention: | | |

Formulations V/1 and V/2 contain both a PP based copolymer. The V/2 exhibits a lower torque than V/1 even once measured 30°C below. Once cured, V/2 leads to a higher elastic recovery and thus to a lower compression set as measured following ASTM D395-B.

## Claims

**1.** Solid curable polymeric composition comprising

(i) a thermoplastic block copolymer containing at least two polymer blocks A separated by at least one polymer block B, wherein each polymer block A is primarily a pcly(monovinyl aromatic hydrocarbon) block, the A blocks representing from 5 to 60% by weight of (i), and polymer block E is primarily a saturated elastomeric hydrocarbon polymer block;
(ii) from 10 to 60 percent by weight, relative to the total weight of polymer block B and all compounds compatible therewith selected from (ii), (iii), (w), and (vii), but less than 1.5 times the amount in weight/weight of the thermoplastic block copolymer (i) of

* a polymerisable monofunctional compound (I) compatible with polymer block B or .
* a composition (II) of polymerisable functional compounds which composition (II) is compatible with polymer block B and comprises at least one monofunctional compound (I) and up to 30 percent by weight on the composition (II) of one or more multifunctional curable compounds (III), and wherein said polymerisable monofunctional compound (I) or said composition (II) has a solubility parameter in the range of 15.3 to 17.8 $(MPa)^{1/2}$ (according to the standards ISBN 0-471-81244.7):

(iii) optionally up to 15 parts by weight per 100 parts by weight of component (ii) of an initiator that is at least partially compatible with the polymer block B and/or component (ii) ;
(iv) optionally a polyolefin polymer;
(v) optionally up to 400 parts by weight per 100 parts by weight of polymer blocks B of a plasticiser compatible with polymer block B and incompatible with polymer blocks A;
(vi) optionally an aromatic resin compatible with polymer blocks A and incompatible or only partially compatible with polymer block B, and
(vii) optionally up to 200 parts by weight per 100 parts by weight of polymer blocks B of a tackifying resin compatible with polymer blocks B and mostly incompatible with end block A.

**2.** Solid curable polymeric composition as claimed in claim 1, wherein the initiator is a photo-initiator.

**3.** Solid curable polymeric composition as claimed in claim 2, wherein the photo-initiator is present in an amount from 0.005 to 15 parts by weight per 100 parts by weight of component (ii).

**4.** Solid curable polymeric composition as claimed in any one of the preceding claims, wherein in the block copolymer, the polymer block B is a hydrogenated poly(conjugated diene) block.

**5.** Solid curable polymeric composition as claimed in any one of the preceding claims, wherein the block copolymer has the structure A-B-A, A-B-A' , A-B-A' -B' , (A-B) nX or (A-B)pX(B'(-A')r)q, wherein X is the residue of a coupling agent; A' and B' are polymer blocks of the same or different molecular weight as polymer blocks A and B respectively and polymer blocks A' and B' are selected from the same group of chemical compounds as polymer blocks A and B respectively; $n \geq 2$; $p \geq 1$; r is 0 or 1; $q \geq 1$; and $(r^*q + p) \geq 2$.

**6.** Solid curable polymeric composition as claimed in any one of the preceding claims, wherein the polymerisable monofunctional compound (I) is chosen from the group of acrylic esters and methacrylic esters of n-alkyl with the alkyl chain containing more than five up to thirty carbon atoms; acrylic esters and methacrylic esters of secondary or branched chain alkyls where the alkyl chain contains more than three up to thirty carbon atoms, and mixtures thereof.

**7.** Solid curable polymeric composition as claimed in any one of the preceding claims, wherein the weight percentage of component (ii) is in an amount from 15 to 50 percent by weight relative to the total weight of polymer block B and all compounds compatible therewith.

**8.** Process for the preparation of a cured polymeric composition, which comprises polymerizing component (ii) in the curable polymeric composition as claimed in any one of the preceding claims at a temperature below the order-disorder transition temperature of the polymeric composition.

**9.** Cured polymeric composition obtainable by curing a curable polymeric composition as claimed in any one of claims 1 to 8 and articles containing the same.

## Revendications

**1.** Composition polymère solide durcissable comprenant (i) un copolymère thermoplastique séquencé contenant au moins deux séquences polymères A séparées par au moins une séquence polymère B, dans laquelle chaque séquence polymère A est principalement une séquence d'hydrocarbure poly(monovinylaromatique), les séquences A représentant 5 à 60% en poids de (i), et la séquence polymère B est principalement une séquence polymère hydrocarbonée élastomère saturée; (ii) 10 à 60 pour-cent en poids, par rapport au poids total de la séquence polymère B et de tous les composés, compatibles avec celle-ci, choisis dans le groupe constitué de (ii), (iii), (v) et (vii), mais en quantité inférieure à 1,5 fois la quantité en poids/poids du copolymère séquencé thermoplastique (i)

* d'un composé monofonctionnel polymérisable (I) compatible avec la séquence polymère B ou
* d'une composition (II) de composés fonctionnels polymérisables, laquelle composition (II) est compatible avec la séquence polymère B et comprend au moins un composé monofonctionnel (I) et jusqu'à 30 pour-cent en poids de la composition (II) d'un ou plusieurs composés durcissables monofonctionnels (III), et dans laquelle ledit composé monofonctionnel polymérisable (I) ou ladite composition (II) a un paramètre de solubilité dans la plage de 15,3 à 17,8 $(MPa)^{1/2}$ (selon les standards ISBN 0-471-81244.7);

(iii) éventuellement jusqu'à 15 parties en poids par 100 parties en poids du composant (ii) d'un initiateur qui est au moins en partie compatible avec la séquence polymère B et/ou le composant (ii);
(iv) éventuellement un polymère de polyoléfine;
(v) éventuellement jusqu'à 400 parties en poids par 100 parties en poids des séquences polymères B d'un plastifiant compatible avec la séquence polymère B et incompatible avec les séquences polymères A;
(vi) éventuellement une résine aromatique compatible avec les séquences polymères A et incompatible ou seulement en partie compatible avec la séquence polymère B; et
(vii) éventuellement jusqu'à 200 parties en poids par 100 parties en poids des séquences polymères B d'une résine adhésivante compatible avec les séquences polymères B et principalement incompatible avec la séquence finale A.

2. Composition polymère solide durcissable selon la revendication 1, dans laquelle l'initiateur est un photoinitiateur.

3. Composition polymère solide durcissable selon la revendication 2, dans laquelle le photoinitiateur est présent en quantité de 0,005 à 15 parties en poids par 100 parties en poids de composant (ii).

4. Composition polymère solide durcissable selon l'une quelconque des revendications précédentes, dans laquelle, dans le copolymère séquencé, la séquence polymère B est une séquence de poly(diène conjugué).

5. Composition polymère solide durcissable selon l'une quelconque des revendications précédentes, dans laquelle le copolymère séquencé a la structure A-B-A, A-B-A', A-B-A'-B', (A-B)nX ou (A-B)pX(B'(-A')r)q, dans laquelle X est le résidu d'un agent de couplage; A' et B' sont des séquences polymères de même poids moléculaire que les séquences polymères A et B ou de poids moléculaire différent de celles-ci et, respectivement, les séquences polymères A' et B' sont choisies dans le même groupe de composés chimiques que les séquences polymères A et B, respectivement; n = 2; p = 1; r est 0 ou 1; q = 1; et (r*q + p) = 2.

6. Composition polymère solide durcissable selon l'une quelconque des revendications précédentes, dans laquelle le composé monofonctionnel polymérisable (I) est choisi dans le groupe constitué des esters acryliques et des esters méthacryliques de n-alkyle, la chaîne alkyle contenant plus de cinq et jusqu'à trente atomes de carbone; des esters acryliques et des esters méthacryliques d'alkyle à chaîne secondaire ou ramifiée, où la chaîne alkyle contient plus de trois et jusqu'à trente atomes de carbone, et leurs mélanges.

7. Composition polymère solide durcissable selon l'une quelconque des revendications précédentes, dans laquelle le pourcentage en poids du composant (ii) se situe dans la plage de 15 à 50 pour-cent en poids par rapport au poids total de la séquence polymère B et de tous les composés compatibles avec celle-ci.

8. Procédé pour la préparation d'une composition polymère durcie, qui comprend la polymérisation d'un composant (ii) dans la composition polymère durcissable selon l'une quelconque des revendications précédentes à une température inférieure à la température de transition ordre-désordre de la composition polymère.

9. Composition polymère durcie qui peut être obtenue en durcissant une composition polymère durcissable selon l'une quelconque des revendications 1 à 8 et articles la contenant.

## Patentansprüche

1. Feste härtbare Polymerzusammensetzung umfassend

i) ein thermoplastisches Blockcopolymer enthaltend wenigstens zwei Polymerblöcke A, die durch wenigstens einen Polymerblock B voneinander getrennt sind, worin jeder Polymerblock A hauptsächlich ein poly(monovinylaromatischer Kohlenwasserstoff) Block ist, und wobei die A-Blöcke von 5 bis 60 Gew-% von (i) darstellen, und der Polymerblock E hauptsächlich ein gesättigter elastomerer Kohlenwasserstoffpolymerblock ist;

ii) von 10 bis 60 Gew-%, bezogen auf das Gesamtgewicht des Polymerblocks B und aller damit kompatiblen Verbindungen, ausgewählt aus (ii), (iii), (v) und (vii), aber weniger als 1,5-mal die Menge in Gewicht/Gewicht des thermoplastischen Blockcopolymers (i) von

* einer polymerisierbaren monofunktionellen Verbindung (I), die mit dem Polymerblock B kompatibel ist oder
* einer Zusammensetzung (II) von polymerisierbaren funktionellen Verbindungen, wobei die Zusammensetzung (II) mit dem Polymerblock B kompatibel ist und wenigstens eine monofunktionelle Verbindung (I) umfasst und bis zu 30 Gew-% der Zusammensetzung (II) von einer oder mehreren multifunktionellen härtbaren Verbindungen (III) und worin die polymerisierbare monofunktionelle Verbindung (I) oder die Zusammensetzung (II) einen Löslichkeitsparameter im Bereich von 15,3 bis 17,8 $(MPa)^{1/2}$ (gemäß den Standards ISBN 0-471-81244.7) aufweist;

(iii) wahlweise bis zu 15 Gewichtsprozent auf 100 Gewichtsteile des Bestandteils (ii) eines Initiators, der wenigstens teilweise mit dem Polymerblock B und/oder dem Bestandteil (ii) kompatibel ist;
(iv) wahlweise ein Polyolefinpolymer;
(v) wahlweise bis zu 400 Gewichtsteile auf 100 Gewichtsteile des Polymerblocks B eines Weichmachers, der mit dem Polymerblock B kompatibel ist und mit den Polymerblöcken A inkompatibel ist;
(vi) wahlweise ein aromatisches Harz, das mit den Polymerblöcken A kompatibel ist und mit dem Polymerblock B inkompatibel oder nur teilweise kompatibel ist, und
(vii) wahlweise bis zu 200 Gewichtsteile auf 100 Gewichtsteile der Polymerblöcke B eines Harzes zur Erhöhung der Klebrigkeit, das mit den Polymerblöcken B kompatibel ist und größtenteils mit dem Endblock A inkompatibel ist.

**2.** Feste härtbare Polymerzusammensetzung nach Anspruch 1, worin der Initiator ein Photoinitiator ist.

**3.** Feste härtbare Polymerzusammensetzung nach Anspruch 2, worin der Photoinitiator in einer Menge von 0,05 bis 15 Gewichtsteile auf 100 Gewichtsteile des Bestandteils (ii) vorhanden ist.

**4.** Feste härtbare Polymerzusammensetzung nach einem der vorhergehenden Ansprüche, worin in dem Blockcopolymer, der Polymerblock B ein hydrierter poly(konjugierter Dien)Block ist.

**5.** Feste härtbare Polymerzusammensetzung nach einem der vorhergehenden Ansprüche, worin das Blockcopolymer die Struktur A-B-A, A-B-A', A-B-A'-B', (A-B)nX oder (A-B)pX(B'(-A')r)q ist, und worin X der Rest eines Kopplungsmittels ist; A' und B' sind Polymerblöcke mit dem gleichen oder verschiedenen Molekulargewicht wie die Polymerblöcke A und B und worin die Polymerblöcke A' und B' ausgewählt sind aus der gleichen Gruppe der chemischen Verbindungen wie die Polymerblöcke A bzw. B; $n \geq 2$, $p \geq 1$; r ist 0 oder 1; $q \geq 1$; und $(r^*q + p) \geq 2$.

**6.** Feste härtbare Polymerzusammensetzung nach einem der vorhergehenden Ansprüche, worin die polymerisierbare monofunktionelle Verbindung (I) ausgewählt ist aus der Gruppe der n-Alkylacrylester und -methacrylester, und wobei die Alkylkette mehr als fünf und bis zu dreißig Kohlenstoffatome enthält; Acrylester und Methacrylester von sekundären oder verzweigtkettigen Alkylen, wobei die Alkylkette wenigstens mehr als drei und bis zu dreißig Kohlenstoffatome enthält, und Mischungen davon.

**7.** Feste härtbare Polymerzusammensetzung nach einem der vorhergehenden Ansprüche, worin die Gewichtsprozentanteile des Bestandteils (ii) in einer Menge von 15 bis 50 Gewichtsprozent, bezogen auf das Gesamtgewicht des Polymerblocks B und aller damit kompatibler Verbindungen vorhanden sind.

**8.** Verfahren zur Herstellung einer gehärteten Polymerzusammensetzung, das das Polymerisieren des Bestandteils (ii) in der härtbaren polymeren Zusammensetzung nach einem der vorhergehenden Ansprüche umfasst, bei einer Temperatur die unterhalb der Ordnung - Unordnung Umwandlungstemperatur der Polymerzusammensetzung liegt.

**9.** Gehärtete Polymerzusammensetzung erhältlich durch das Härten einer härtbaren Polymerzusammensetzung nach einem der Ansprüche 1 bis 8 und Formkörper diese enthaltend.